# DEMANDE DE BREVET EUROPEEN

(11) **EP 0 537 076 A1**
(43) Date de publication de la demande: **14.04.1993**
(21) Numéro de dépôt: 92402755.0
(22) Date de dépôt: 08.10.1992
(51) Int. Cl.: F16L 55/124, F16K 7/10, G01P 13/02

(54) **Procédé et dispositif d'introduction provisoire d'un appareil dans une canalisation enterrée**

(30) Priorité: 09.10.1991 FR 9112443
(71) Demandeur: GAZ DE FRANCE, F-75017 Paris (FR)
(72) Inventeur: Lasserre, Pierre, F-95210 Saint Gratien (FR); Pfeiffer, Dominique, F-60950 Ermenonville (FR); Wartel, Christian, F-75020 Paris (FR)
(74) Mandataire: Durand, Yves Armand Louis

(57) **Abrégé**

La présente invention concerne un procédé et un dispositif d'introduction provisoire d'un appareil dans une canalisation enterrée.

Le dispositif comprend essentiellement un fourreau (2) apte à être enterré dans un trou de forage (1) et comportant en partie supérieure un sas (3), des chambres expansibles (4) associées à la paroi externe du fourreau (2), et une tête (6) montée de façon amovible ou non en partie inférieure (5) du fourreau (2) pour permettre la liaison étanche entre ce dernier et une canalisation (C) enterrée dans le sol (5) dans laquelle doit être introduit provisoirement un appareil (13) via le fourreau (2).

Ce procédé et ce dispositif s'appliquent notamment à l'obturation provisoire d'une canalisation transportant du gaz et sur laquelle doit être pratiquée une intervention programmée ou d'urgence.

## Description

La présente invention a essentiellement pour objet un procédé d'introduction provisoire d'un appareil dans une canalisation enterrée.

Elle vise également un dispositif comportant application de ce procédé.

Pour accéder à l'intérieur d'une canalisation en charge, qui doit par exemple être obturée provisoirement pour permettre une intervention sur ladite canalisation, il est déjà connu de procéder de la façon suivante :
- on réalise tout d'abord dans le sol une fouille plus ou moins importante, à l'aide d'un outillage de terrassement classique, jusqu'à mise à jour de la conduite ;
- on fixe sur la canalisation un organe formant sas ;
- on perce ensuite la canalisation à l'aide d'un outil approprié, et cela au travers du sas, ce qui empêche la communication du fluide circulant dans la canalisation avec l'atmosphère extérieure via la fouille ; et
- on introduit, par le perçage, dans la canalisation un appareil qui peut être un ballon gonflable susceptible d'obturer temporairement la canalisation.

On comprend donc que le problème principal qui est posé ici est de percer la canalisation en charge pour y introduire ensuite un obturateur par exemple, depuis la surface du sol, toutes ces opérations devant s'effectuer sans dégagement incontrôlable de fluide, lequel peut être par exemple du gaz.

Or la technique exposée précédemment est loin d'être satisfaisante tant sur le plan de la rapidité d'exécution que sur celui du coût. Plus précisément, l'introduction de l'appareil, tel qu'un ballon obturateur, dans la canalisation préalablement percée est une opération délicate et parfois longue à réaliser, d'autant plus que le ballon obturateur doit être introduit dans la canalisation vers l'amont, c'est-à-dire à l'encontre du sens de circulation ou de la pression du fluide circulant dans la canalisation. En outre, on comprend que l'opération peut être dangereuse pour le personnel, puisque l'opération d'introduction, malgré le sas, peut provoquer des fuites de fluide vers l'atmosphère extérieure. Egalement, la pose du sas sur la canalisation est délicate, et la fouille pour mettre à nu la canalisation doit être relativement importante pour faciliter l'opération, ce qui représente un temps et un coût de main d'oeuvre non négligeables.

Aussi, la présente invention a pour but de remédier à ces inconvénients en proposant un procédé et un dispositif permettant l'introduction provisoire d'un appareil dans une canalisation en charge, et cela de façon fiable et rapide.

A cet effet, l'invention a pour objet un procédé d'introduction provisoire d'un appareil quelconque dans une canalisation enterrée où circule un fluide tel que par exemple du gaz et du type consistant à effectuer dans le sol une fouille jusqu'à mise à jour de la canalisation, à percer ladite canalisation à l'aide d'un outil et cela en utilisant des moyens empêchant la communication du fluide dans la canalisation avec l'atmosphère extérieure via la fouille, et à introduire dans ladite canalisation un appareil quelconque via le perçage réalisé dans celle-ci, caractérisé en ce qu'après avoir effectué la fouille :
- on y dispose un fourreau comportant les moyens précités empêchant toute communication du fluide dans la canalisation avec l'atmosphère extérieure via la fouille ;
- on rend ledit fourreau solidaire de la paroi interne de la fouille ;
- on réalise une liaison étanche entre le fourreau et la canalisation ;
- on effectue le perçage de la canalisation après insertion et passage de l'outil à l'intérieur du fourreau ; et
- on fait passer l'appareil dans le fourreau pour l'introduire dans la canalisation.

On comprend donc déjà que l'implantation initiale dans la fouille d'un fourreau lui-même comportant des moyens susceptibles d'empêcher toute fuite de fluide dans l'atmosphère extérieure et assurant une liaison étanche entre le fourreau et la canalisation, facilite grandement toutes les opérations qui seront effectuées au travers du fourreau.

Suivant une autre caractéristique de ce procédé, la liaison étanche entre fourreau et canalisation est effectuée à l'aide d'un matériau polymérisable.

On précisera encore ici qu'avant d'introduire l'appareil dans la canalisation, on y introduit, via le fourreau, un système déterminant le sens de circulation du fluide dans la canalisation.

Après retrait de l'appareil de la canalisation via le fourreau, on pourra faire avantageusement passer dans le fourreau un système de bouchage ou colmatage du perçage dans la canalisation.

L'invention vise également un dispositif pour la mise en oeuvre du procédé répondant aux caractéristiques ci-dessus, ce dispositif comprenant essentiellement un fourreau apte à être inséré dans une fouille, un trou de forage ou analogue et comportant en partie supérieure un sas, des moyens expansibles, tels que des chambres gonflables, associés à la paroi externe du fourreau, et une tête montée de façon amovible ou non en partie inférieure du fourreau pour permettre la liaison étanche entre celui-ci et une canalisation enterrée dans le sol.

Ce dispositif est encore caractérisé en ce que le diamètre interne du fourreau est apte à permettre le passage d'un appareil quelconque à introduire dans la canalisation, tel que par exemple un élément susceptible d'obturer cette dernière du type ballon, une caméra, une sonde ou autre type d'appareil.

Le diamètre interne du fourreau est également apte à permettre le passage et le retrait d'un système permettant le perçage de la canalisation, permettant la détermination du sens de circulation du fluide dans la canalisation, et permettant l'obturation du perçage dans celle-ci.

On précisera encore ici que la tête du fourreau montée de façon amovible ou non à la partie inférieure de celui-ci est constituée par un joint, par exemple en matériau polymérisable.

Ce joint peut être mis en place entre la partie d'extrémité inférieure du fourreau et la canalisation à l'aide d'un outillage passant à l'intérieur dudit fourreau.

Mais d'autres avantages et caractéristiques de l'invention apparaîtront mieux dans la description détaillée qui suit et se réfère aux dessins annexés donnés uniquement à titre d'exemple, et dans lesquels :
La figure 1 est une vue schématique et en coupe axiale d'un fourreau implanté dans un trou de forage et contenant un dispositif d'introduction d'un ballon gonflable illustré en position d'obturation d'une canalisation en charge ;
La figure 2 est une vue en coupe axiale mais partielle du fourreau contenant un outil de perçage de la canalisation ;
La figure 3 est encore une vue partielle et en coupe axiale du fourreau dans lequel est introduit un système de détermination du sens de la circulation du fluide dans la canalisation ;
La figure 4 est encore une vue partielle et en coupe axiale du fourreau en position installée dans le trou de forage et dans lequel a été introduit un système d'obturation du perçage dans la canalisation, laquelle obturation est effectuée après une intervention quelconque sur ladite canalisation.

En se reportant aux figures, on voit une fouille 1 pratiquée dans le sol S à l'aide d'un équipement approprié montré schématiquement en 2 et qui peut être un équipement léger du fait que le dispositif selon cette invention ne nécessite qu'une fouille 1 peu importante ou encore l'existence d'un trou de forage de section relativement petite.

Conformément à l'invention, dans le trou 1, permettant la mise jour de la canalisation C transportant un fluide tel que du gaz, est introduit un fourreau 2 dont la partie supérieure est munie d'un sas représenté schématiquement en 3 et agencé entre deux vannes (non représentées). L'utilité d'un tel sas sera expliquée ultérieurement.

En dessous du sas 3, la paroi externe du fourreau 2 est munie d'une ou plusieurs chambres expansibles et éventuellement gonflables 4.

Enfin, à la partie inférieure 5 du fourreau 2 est prévue une tête 6 permettant la liaison étanche du fourreau 2 avec la canalisation C et pouvant être montée d'une façon amovible ou non sur la partie inférieure 5 du fourreau 2.

Cette tête, représentée très schématiquement en 6, peut être constituée par un joint monté sur la partie inférieure 5 du fourreau 2. Ce joint peut par exemple être constitué par un matériau polymérisable, et, s'il n'est pas fixé à demeure sur la partie inférieure 5 du fourreau 2, on peut le réaliser à l'aide d'un outillage approprié quelconque (non représenté) introduit dans le fourreau 2, une fois celui-ci introduit dans la fouille ou le trou 1.

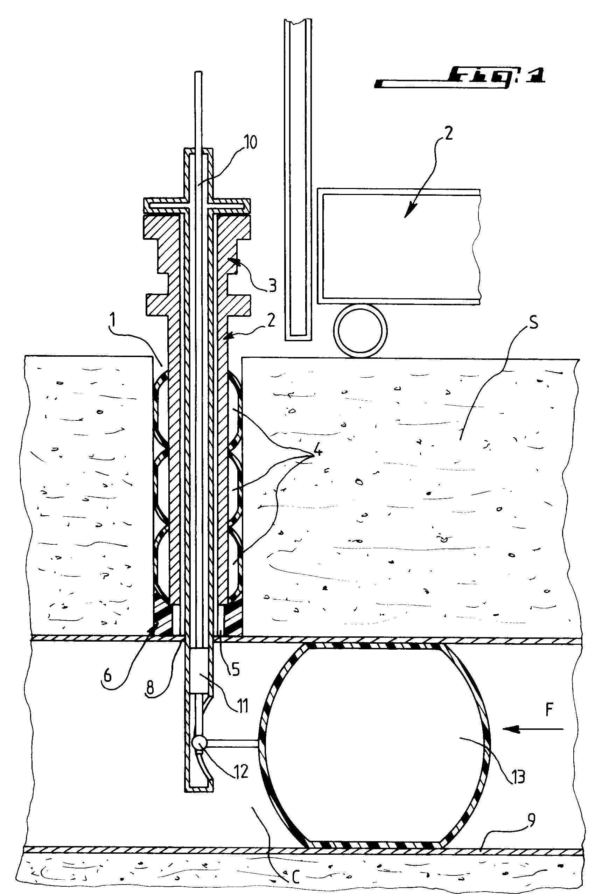

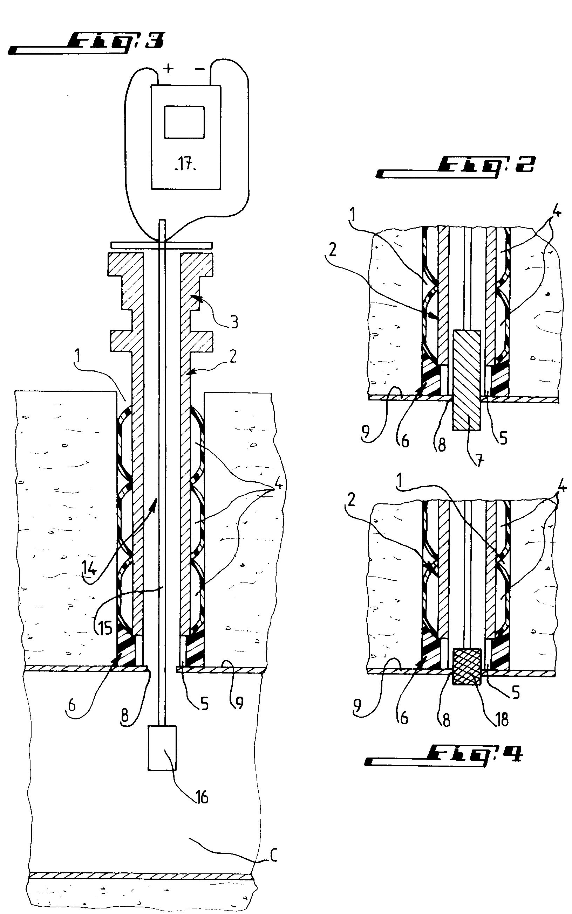

Dans le fourreau 2, comme on le voit sur la figure 2, peut être introduit un outil 7 rotatif de perçage, susceptible de réaliser un trou 8 dans la paroi 9 de la canalisation C.

Egalement, comme on le voit sur la figure 1, on peut introduire dans le fourreau 2 un équipement essentiellement constitué d'une tige 10 avec embout 11 auquel est fixé en 12 un élément d'obturation provisoire de la conduite C, lequel élément revêt ici la forme d'un ballon gonflable.

A la place du ballon gonflable 13, on pourrait parfaitement et sans sortir du cadre de l'invention, atteler à l'embout 11 de la tige 10 un autre appareil tel que par exemple une caméra pour inspecter la canalisation C, ou une sonde, ou encore tout autre type d'appareil.

Comme il apparaît clairement sur la figure 3, le diamètre interne du fourreau 2 peut être apte à permettre encore le passage d'un système 14 de détection du sens de circulation du fluide dans la canalisation C. Une telle détection est en effet importante, dans la mesure où l'on doit obturer la canalisation 6 à l'aide d'un ballon obturateur tel que 13 qui doit nécessairement être introduit vers l'amont, c'est-à-dire à l'encontre de la pression exercée par le fluide, de façon à empêcher toute fuite de fluide vers l'atmosphère extérieure via le perçage 8. Le système de détection 14 comprend essentiellement une tige 15 à l'extrémité de laquelle est prévu un détecteur 16 du sens de circulation du fluide dans la canalisation C. L'autre extrémité du système 14 est reliée par une filerie à un boîtier 17 affichant le résultat de la détection.

On a montré sur la figure 4 un outillage 18 porté par une tige pouvant être introduite dans le fourreau 2. L'outillage 18 permet le bouchage ou le colmatage du perçage 8 dans la canalisation C après que le ballon 13 ait été retiré du fourreau 2, une fois que l'intervention souhaitée sur la canalisation ait été effectuée.

Mais, pour une meilleure compréhension de l'invention, on expliquera ci-après comment fonctionnent les éléments ci-dessus décrits pour permettre l'obturation provisoire de la canalisation afin de réaliser sur celle-ci une intervention ou une réparation quelconque.

On réalise tout d'abord une fouille ou un trou 1 de dimensions réduites dans le sol S à l'aide de l'équipement 2 de façon à mettre à jour la paroi externe 9 de la canalisation C.

On introduit ensuite le fourreau 2 dans le trou 1, lequel fourreau comprend, comme expliqué précédemment le sas 3, les chambres expansibles 4 et éventuellement la tête 6 assurant une liaison étanche avec ladite canalisation.

Les chambres expansibles 4 reliées à une source d'air comprimé par exemple (non représentée) sont gonflées ou dilatées pour ainsi réaliser, en prenant appui contre la paroi interne du trou 1, un blocage rapide du fourreau 2 dans ledit trou.

L'extrémité inférieure 5 du fourreau 2 réalise grâce à la tête 6, une liaison étanche entre fourreau et canalisation, dans la mesure où ladite tête est initialement solidaire du fourreau. Si ce n'est pas le cas, on pourra introduire un outillage approprié et non représenté via l'intérieur du fourreau 2 pour réaliser la jonction étanche en question entre partie inférieure 5 du fourreau 2 et canalisation C.

Ensuite, grâce à l'outillage 7 (figure 2) introduit dans le fourreau 2 via le sas 3, on réalise le perçage du trou 8 dans la canalisation C, puis on retire du fourreau 2 ledit outillage.

Le système 14(figure 3) est alors introduit dans le fourreau 2 via le sas 3, et la sonde de détection 16 pénétrant par le trou 8 dans la canalisation C, permet de déterminer le sens de circulation du fluide dans ladite canalisation, ce après quoi, ledit système 14 est retiré du fourreau 2.

A ce stade, le ballon-obturateur 13 peut être introduit dans la canalisation C via le sas 3, grâce à la tige 10 qui le porte. Le ballon obturateur 13 sera introduit vers la droite de la figure 1, c'est-à-dire à l'encontre de la pression exercée par le fluide circulant dans la canalisation C, comme matérialisé par la flèche F.

Le ballon obturateur 13 sera alors gonflé à l'aide d'une source d'air comprimé appropriée par exemple pour obturer provisoirement la canalisation C comme cela est bien visible sur la figure 1, et le personnel pourra alors réaliser toute intervention souhaitable sur la conduite C.

Une fois l'intervention terminée, le ballon obturateur 13 sera dégonflé et la tige 10 portant ledit ballon sera retirée du fourreau 2 via le perçage 8 et le sas 3.

Le perçage 8 pourra alors être obturé à l'aide d'un bouchon par exemple grâce à l'outillage représenté schématiquement en 18 sur la figure 4.

Ceci étant fait, l'outillage 18 sera retiré du fourreau, nécessairement et toujours via le sas 3, les chambres expansibles 4 seront dégonflées et le fourreau 2 pourra être ainsi retiré du trou 1 qui sera finalement remblayé.

On a donc réalisé suivant l'invention un procédé et un dispositif d'introduction provisoire d'un appareil dans une canalisation enterrée quelconque, et cela d'une manière fiable, rapide, sans danger pour le personnel devant pratiquer une intervention sur la canalisation, et sans gêne ni bruit pour l'environnement.

Ce procédé et ce dispositif pourront être bien sûr utilisés pour toutes les opérations programmées ou d'urgence d'intervention sur les conduites de transport de gaz par exemple, en milieu urbain ou non.

Bien entendu, l'invention n'est nullement limitée au mode de réalisation décrit et illustré qui n'a été donné qu'à titre d'exemple.

C'est ainsi que le dispositif de cette invention peut permettre l'introduction provisoire de tout type d'appareil dans une canalisation enterrée, et autre qu'un ballon obturateur. Egalement, la tête de liaison étanche du fourreau à la canalisation peut être quelconque, de même que le nombre et la matière des chambres expansibles assurant la fixation provisoire du fourreau dans la fouille donnant accès à la canalisation sur laquelle il convient d'intervenir. Le fourreau pourra encore constituer une pièce unitaire ou bien être constitué de plusieurs éléments emboîtables ou télescopiques, pour ainsi pouvoir s'adapter à la hauteur de fouille à réaliser.

C'est dire que l'invention comprend tous les équivalents techniques des moyens décrits ainsi que leurs combinaisons si celles-ci sont effectuées suivant son esprit.

## Revendications

1. Procédé d'introduction provisoire d'un appareil quelconque dans une canalisation enterrée où circule un fluide tel que par exemple du gaz et du type consistant à effectuer dans le sol une fouille jusqu'à mise à jour de la canalisation, à percer ladite canalisation à l'aide d'un outil et cela en utilisant des moyens empêchant la communication du fluide dans la canalisation avec l'atmosphère extérieure via la fouille, et à introduire dans ladite canalisation un appareil quelconque via le perçage réalisé dans celle-ci, caractérisé en ce qu'après avoir effectué la fouille :
- on dispose dans la fouille un fourreau comportant les moyens précités empêchant toute communication du fluide dans la canalisation avec l'atmosphère extérieure via la fouille ;
- on rend ledit fourreau solidaire de la paroi interne de la fouille ;
- on réalisé une liaison étanche entre le fourreau et la canalisation ;
- on effectue le perçage de la canalisation après insertion et passage de l'outil à l'intérieur du fourreau ; et
- on fait passer l'appareil dans le fourreau pour l'introduire dans la canalisation.

2. Procédé selon la revendication 1, caractérisé en ce que la liaison étanche entre fourreau et canalisation est effectuée à l'aide d'un matériau polymérisable.

3. Procédé selon la revendication 1, caractérisé en ce qu'avant d'introduire l'appareil dans la canalisation, on y introduit, via le fourreau, un système déterminant le sens de circulation du fluide dans la canalisation.

4. Procédé selon la revendication 1 ou 3, caractérisé en ce qu'après retrait de l'appareil de la canalisation via le fourreau, on fait passer dans le fourreau un système de bouchage ou colmatage du perçage dans la canalisation.

5. Dispositif pour la mise en oeuvre du procédé selon l'une des revendications 1 à 4, caractérisé en ce qu'il comprend : un fourreau (2) apte à être inséré dans une fouille, un trou de forage ou analogue (1) et comportant, en partie supérieure, un sas (3), des moyens expansibles, tels que des chambres gonflables (4), associés à la paroi externe du fourreau (2), et une tête (6) montée de façon amovible ou non, en partie inférieure (5) du fourreau (2) pour permettre la liaison étanche entre ledit fourreau et une canalisation (C) enterrée dans le sol (S).

6. Dispositif selon la revendication 5, caractérisé en ce que le diamètre interne du fourreau (2) est apte à permettre le passage d'un appareil quelconque à introduire dans la canalisation, tel que par exemple un élément (13) susceptible d'obturer cette dernière, du type ballon, une caméra, une sonde ou autre type d'appareil.

7. Dispositif selon la revendication 5 ou 6, caractérisé en ce que le diamètre interne du fourreau (2) est apte à permettre le passage et le retrait d'un système (7, 14, 18) permettant le perçage de la canalisation (C), la détermination du sens de circulation du fluide dans la canalisation, et l'obturation du perçage (8) dans celle-ci.

8. Dispositif selon la revendication 5, caractérisé en ce que la tête précitée (6) montée de façon amovible ou non à la partie inférieure (5) du fourreau est constituée par un joint par exemple en matériau polymérisable.

9. Dispositif selon la revendication 8, caractérisé en ce que le joint précité est mis en place entre la partie d'extrémité inférieure (5) du fourreau (2) et la canalisation (C) à l'aide d'un outillage passant à l'intérieur du fourreau (2).
